Europäisches Patentamt

European Patent Office

Office européen des brevets

(19)

(11) Veröffentlichungsnummer: **0 139 864**
**A2**

(12) # EUROPÄISCHE PATENTANMELDUNG

(21) Anmeldenummer: **84108200.1**

(22) Anmeldetag: **12.07.84**

(51) Int. Cl.⁴: **C 08 G 8/00**
**C 08 G 8/08**

(30) Priorität: **27.08.83 DE 3330982**

(43) Veröffentlichungstag der Anmeldung:
**08.05.85 Patentblatt 85/19**

(84) Benannte Vertragsstaaten:
**AT BE CH DE FR GB IT LI LU NL SE**

(71) Anmelder: **DYNAMIT NOBEL AKTIENGESELLSCHAFT**
**Postfach 1209**
**D-5210 Troisdorf, Bez. Köln(DE)**

(72) Erfinder: **Jung, Karl-Heinz, Dr.**
**Wilhelm-Busch-Strasse 46**
**D-5210 Troisdorf(DE)**

(54) Verfahren zur Herstellung eines Phenolresolharzes.

(57) Phenolresolharze werden durch Kondensation von Phenol oder einem Phenolgemisch mit einer wäßrigen Formaldehydlösung in Gegenwart von Bariumhydroxid hergestellt und nach Neutralisation mit verdünnter Schwefelsäure so lange einem Entwässerungsprozeß unterworfen, bis eine klare Lösung entsteht. Die Entwässerung erfolgt bevorzugt durch Vakuumdestillation bei 50 bis 65°C bis zu einem Festharzgehalt von mindestens 65%. Die Phenolresolharze werden vorzugsweise aus Phenolen und Formaldehyd im Molverhältnis 1:1,4 bis 1:2,6 hergestellt.

EP 0 139 864 A2

Troisdorf, den 25.8.83
OZ 83046 (4276) Me/Ha

DYNAMIT NOBEL AKTIENGESELLSCHAFT
Troisdorf, Bez. Köln

## Verfahren zur Herstellung eines Phenolresolharzes

Phenolresole, die durch Polykondensation von
Phenolen mit Formaldehyd in Gegenwart von Bariumhydroxid hergestellt sind, sind als besonders
schnell härtende und - nach Härtung - thermisch
stabile Harze bekannt. Es ist jedoch auch als nachteilig bekannt, daß die Polykondensation selbst
bei Temperaturen von 1o bis 2o$^{o}$C in unerwünschtem
Maße fortschreitet, so daß eine Lagerhaltung erschwert wird.

Die Behebung dieses Nachteils kann durch Neutralisation des barytalkalischen Resols erfolgen.
Da darüberhinaus eine Reduzierung der elektrischen
Leitfähigkeit erforderlich wird, wenn das Resol
für die Herstellung von Produkten in der Elektroindustrie, z.B. für die Herstellung von Hartpapier,
verwendet werden soll, hat es sich dem Stand der
Technik entsprechend als zweckmäßig erwiesen, bei der Neutralisation das Bariumhydroxid als nicht dissoziiertes Bariumsulfat oder Bariumkarbonat oder Bariumoxalat zu fällen. Die sich absetzenden Ausfällungen erfordern den relativ hohen Aufwand von Trennungsoperationen, wie z.B. Filtration und/oder Zentrifugation, wobei ein Verlust an Phenolharz, das im feuchten Filterrückstand bzw. Zentrifugat verbleibt, nicht vermieden werden kann.

Die beschriebenen Nachteile können gemäß dem in der DE-OS 29 11 2o6 beschriebenen Verfahren dadurch umgangen werden, daß man die Polykondensation von Phenol(en) "in der Schmelze" mittels Paraformaldehyd in Gegenwart von $Ba(OH)_2$ und die anschließende Neutralisation mit Schwefelsäure unter den Bedingungen durchführt, die in den Ansprüchen dieses Schutzrechtes festgelegt sind (Viskosität bei $2o^oC$ = mindestens 2oo, vorzugsweise 5oo mPa·s).

Das gemäß der DE-OS 29 11 2o6 beschriebene Verfahren beinhaltet jedoch den Nachteil sehr langer Reaktionszeiten, die bei der Wahl einer Reaktionstemperatur von $6o^oC$ in den angegebenen Beispielen 1o-14 Stunden betragen. Die hohen Konzentrationen der Ausgangsstoffe, wie sie unter den genannten "Schmelzbedingungen" angewendet werden, bedingen bekanntlich ein derartig stark exothermes Verhalten, daß zwecks exakter Reaktionssteuerung ein Ausweichen auf niedrige Temperaturen bei langen Kondensationszeiten angeraten erscheint.

Es bestand deshalb die Aufgabe, Phenolresole, die durch Polykondensation von Phenol und Formaldehyd im wäßrigen, Bariumhydroxid enthaltenden Medium hergestellt sind, so zu neutralisieren, daß keine dissoziierbaren Verbindungen entstehen und gleichzeitig kein unlösliches Salz in dem Harz als Trübung

0139864

verbleibt. Dabei soll weiterhin ein Abtrennen von eventuell ausfallenden schwerlöslichen Bariumsalzen vermieden werden.

In Erfüllung dieser Aufgabe wurde nun ein Verfahren zur Herstellung eines Phenolresolharzes durch Kondensation von Phenol oder einem Gemisch verschiedener Phenole mit einer wäßrigen Formaldehydlösung in Gegenwart von Bariumhydroxid und anschließender Neutralisation mit verdünnter Schwefelsäure entwickelt, bei dem man anschließend an die Neutralisation das durch gefälltes Bariumsulfat stark getrübte Reaktionsgemisch einem Entwässerungsprozeß so lange unterwirft, bis eine klare Lösung entsteht.

Bei Anwendung dieses Verfahrens wurde nun überraschend gefunden, daß sich bei der Neutralisation der Phenolresolharze weder Schmelzbedingungen noch die im Anspruch 1 der DE-OS 29 11 2o6 vorgegebenen Neutralisationsbedingungen als zwingend notwendig erweisen.

Gemäß den folgenden Beispielen kann die Harzherstellung bei den relativ niedrigen Konzentrationen der Ausgangsstoffe, wie sie sich beispielsweise beim Einsatz von 91%igem wäßrigem Phenol und 37%iger wäßriger Formaldehydlösung ergeben, bei höheren Temperaturen erfolgen, so daß der Gesamtzeitaufwand (einschließlich einer Destillation) erheblich kürzer wird und die Neutralisation kann - gegensätzlich zur genannten Offenlegungsschrift - bei dem vor der Destillation resultierenden niedrigen Feststoffgehalt und relativ niedrigen Viskositäten erfolgen.

Als Phenolresolharze werden für das erfindungsgemäße Verfahren solche Harze eingesetzt, die durch Kondensation von Phenolen und Formaldehyd im Molverhältnis 1:1,1 bis 1:3,3, vorzugsweise im Bereich von 1:1,4 bis 1:2,6, hergestellt werden. Der Formaldehyd wird dabei

- 4 -

als wäßrige Lösung eingesetzt. Die Alkalität wird durch Zusatz von Bariumhydroxid bzw. dessen Oktahydrat $Ba(OH)_2 \cdot 8H_2O$ in der Weise eingestellt, daß auf 1oo Gewichtsteile Phenol zwischen o,2 und 18 Gewichtsteile, vorzugsweise zwischen 1 und 6 Gewichtsteile, Bariumhydroxid $Ba(OH)_2$ eingesetzt werden. Die Kondensation wird in an sich bekannter Weise so lange durchgeführt, bis ein Festharzgehalt von etwa 4o bis 5o% erreicht ist. Anschließend wird in ebenfalls bekannter Weise mit verdünnter Schwefelsäure neutralisiert, wobei Bariumsulfat ausfällt. Die Neutralisation kann im Temperaturbereich zwischen 2o und 85°C durchgeführt werden. Zweckmäßigerweise läßt man das Phenolresolharz nach der Kondensation kurze Zeit abkühlen, vorzugsweise auf Temperaturen zwischen 6o und 75°C, und führt dann die Neutralisation durch. Daß der Einsatz von 91%igem, wäßrigem Phenol zusätzlich eine betrieblich leichtere Handhabung ermöglicht, bedarf nur des Hinweises. Für das erfindungsgemäße Verfahren können jedoch auch Phenole ohne Zusatz von Wasser als Ausgangsverbindungen eingesetzt werden.

Bei Anwendung der erfindungsgemäßen Verfahrensweise auf die Phenolresole werden diese bei fortschreitender Entwässerung im Feststoffbereich von 65 bis 80% vollkommen klar und lassen sich danach mit Wasser oder den in der Phenolharzchemie üblichen polaren Lösungsmitteln (wie z.B. Methanol, Äthanol, Butanol, Isopropanol, Aceton) verdünnen, ohne daß eine rückläufige Trübung oder Sedimentation durch Bariumsulfat erfolgt.

Die Lagerbeständigkeit ist selbst bei einer hohen Festharzkonzentration, die sich im allgemeinen negativ auswirkt, noch ausreichend. Bei Festharzgehalten um 80% beträgt die Viskositätszunahme bei einer vierwöchigen Lagerung bei Raumtemperatur nur etwa 9%.

Die erfindungsgemäß neutralisierten Phenolresolharze lassen sich in bekannter Weise sowohl thermisch als auch mittels Säuren zu Formkörpern oder Formteilen härten. Wenn erforderlich, kann die Härtungsgeschwindigkeit der erfindungsgemäß hergestellten Phenolresole bei thermischer Härtung in bekannter Weise durch Zusatz von Resorcin oder Basen, wie z.B. Ammoniak, Hexamethylentetramin oder Triethanolamin, erhöht werden.

Bei einer Härtung durch Säurezusätze (sogenannte Kalthärtung) sind erfindungsgemäß hergestellte, hochprozentige Harze besonders hervorzuheben, da sie naturgemäß besonders reaktionsfähig sind. Als Säuren sind, wie üblich, sowohl Mineralsäuren (z.B. Salzsäure oder Schwefelsäure) als auch organische Säuren (z.B. Toluolsulfonsäure, Phenolsulfonsäure) sowie Gemische aus Mineralsäuren und organischen Säuren in Betracht zu ziehen.

Bei thermischer Härtung sind erfindungsgemäß hergestellte Harze zur Herstellung von elektrisch hochwertigen Schichtstoffen und Schleifmitteln besonders geeignet, und bei der Kalthärtung bietet die Herstellung von Gießformen aus harzumhüllten Sanden sowie die Herstellung von Phenolharzschaumstoffen zusätzliche Anwendungsmöglichkeiten für diese Harze.

– 6 –

Beispiel 1

In einem mit Rückflußkühler und mechanischem Rührer versehenen Reaktionsgefäß wurden 1100 Gew.-Teile 91%iges, wäßriges Phenol, 1725 Gew.-Teile 37%iger wäßriger Formaldehyd und 55 Gew.-Teile Bariumhydroxid-Oktahydrat 7o min. bei 85°C zur Reaktion gebracht und danach auf 2o°C gekühlt.

Das resultierende, stark wäßrige Phenolresol hatte einen Feststoffgehalt von 45,6% und eine Viskosität von 19 mPa·s. Es wurde mit 56 Gew.-Teilen 25%iger Schwefelsäure versetzt, wobei das gesamte Bariumhydroxid beim pH-Wert 6,2 als unlösliches Bariumsulfat ausgefällt wurde.

Die stark trübe Resollösung wurde bei angelegtem Vakuum im Temperaturbereich von 55 bis 65°C bis zur Erlangung einer Viskosität von 9980 mPa·s, gemessen bei 2o°C, entwässert.

Die nunmehr völlig klare Harzlösung hatte folgende Eigenschaften:

Rückstand (1,5 Stunden 150°C): 79,3%

Viskosität (2o°C) : 9980 mPa·s

B-Zeit (13o°C) : 9,9 min.

Ein Gew.-Teil Resol konnte mit 2,5 Gew.-Teilen Wasser bis auf den Festgehalt von 22,6% verdünnt werden, ohne daß sich trübende Abscheidungen ergaben. Verdünnungen mit Alkoholen (z.B. Methanol, Äthanol, Isopropanol, Butanol) oder Ketonen (z.B. Aceton) waren ebenfalls ohne Auftreten einer Trübung durch ausgefälltes Bariumsulfat oder Phenolharz möglich.

Nach vierwöchiger Lagerung bei 2o°C hatte das Resol eine Viskosität von 1o 9oo mPa·s.

Beispiel 2

Die Verfahrensweise des Beispiels 1 wurde wiederholt, jedoch wurde die Neutralisation nach Kühlung auf 7o°C vorgenommen.

- 7 -

Das erhaltene Resol wurde bis auf eine Viskosität von 7500 mPa·s entwässert. Die Eigenschaften des dann erhaltenen klaren Resols entsprachen denen des nach Beispiel 1 hergestellten Resols.

Troisdorf, den 25.8.1983
OZ 83046 (4276) Me/Ha

Patentansprüche

1. Verfahren zur Herstellung eines Phenolresolharzes durch Kondensation von Phenol oder einem Gemisch verschiedener Phenole mit einer wäßrigen Formaldehydlösung in Gegenwart von Bariumhydroxid und anschließender Neutralisation mit verdünnter Schwefelsäure, d a d u r c h   g e k e n n - z e i c h n e t, daß man anschließend an die Neutralisation das durch gefälltes Bariumsulfat stark getrübte Reaktionsgemisch einem Entwässerungsprozeß so lange unterwirft, bis eine klare Lösung entsteht.

2. Verfahren gemäß Anspruch 1, dadurch gekennzeichnet, daß die Entwässerung durch Vakuumdestillation, bevorzugt bei 5o bis 65°C, durchgeführt wird.

3. Verfahren gemäß Anspruch 1 oder 2, dadurch gekennzeichnet, daß die Entwässerung bis zu einem Festharzgehalt von mindestens 65% durchgeführt wird.

4. Verfahren nach einem oder mehreren der Ansprüche 1 bis 3, dadurch gekennzeichnet, daß solche Phenolharze eingesetzt werden, die durch Kondensation von Phenolen und Formaldehyd im Molverhältnis 1:1,1 bis 1:3,3, vorzugsweise im Bereich von 1:1,4 bis 1:2,6, hergestellt wurden.

5. Verwendung der gemäß einem der Ansprüche 1 bis 4 hergestellten Phenolresolharze zur Herstellung von Formkörpern oder Formteilen, die durch Härtung, insbesondere saure Härtung, dieser Phenolresolharze erhalten werden.